# EUROPEAN PATENT SPECIFICATION

(11) **EP 4 314 215 B1**
(45) Date of publication and mention of the grant of the patent: **04.11.2026**
(21) Application number: 21721964.1
(22) Date of filing: 26.03.2021
(51) Int. Cl.: C11B 1/10, B01D 11/02, B01J 19/10, C11B 13/00

(54) **PROCESS FOR PRODUCING OIL**
VERFAHREN ZUR HERSTELLUNG VON ÖL
PROCÉDÉ DE PRODUCTION D'HUILE

(43) Date of publication of application: 07.02.2024
(73) Proprietor: Naranjo López, Rafael, 29190 Málaga (ES)
(72) Inventor: Naranjo López, Rafael, 29190 Málaga (ES)
(74) Representative: Balder IP Law, S.L.
(86) International application number: PCT/ES2021/070214
(87) International publication number: WO 2022/200644

(56) References cited:
- CN-A- 107 523 416
- US-A1- 2020 056 115
- US-A1- 2020 263 108
- MARIA LISA CLODOVEO: "An overview of emerging techniques in virgin olive oil extraction process: strategies in the development of innovative plants", JOURNAL OF AGRICULTURAL ENGINEERING, vol. 44, no. 2s, 6 September 2013 (2013-09-06), XP055490416, ISSN: 1974-7071, DOI: 10.4081/jae.2013.s2.e60
- JIMENEZ ET AL: "High-power ultrasound in olive paste pretreatment. Effect on process yield and virgin olive oil characteristics", ULRASONICS SONOCHEMISTRY, BUTTERWORTH-HEINEMANN, GB, vol. 14, no. 6, 24 May 2007 (2007-05-24), pages 725 - 731, XP022095539, ISSN: 1350-4177, DOI: 10.1016/J.ULTSONCH.2006.12.006

## Description

### TECHNICAL FIELD OF THE INVENTION

The present invention relates to a process for producing oil, more specifically, plant-based oil or fish-based oil, which is based on the use of plant-based raw material or fish-based raw material, respectively.

### BACKGROUND OF THE INVENTION

At present, the treatment of raw material of plant or fish origin to produce oils is carried out by means of different known techniques. Essential oils have a wide variety of applications in the food industry, the perfume industry or the pharmaceutical industry, the most widespread methods for their extraction being those based on steam distillation, solvent extraction, mechanical separation or cold pressing.

By way of illustration, CN110846135 discloses a device for the extraction of essential rose oil in which the raw material is placed in a mixing box, from which it is transferred to a distillation kettle after being stirred, and subsequently water vapor is injected into an oil-water separator through the condenser. Likewise, patent application US2020147517 discloses an essential oil extraction process using a device with a material chamber, heater, coil and cavity to store a gas.

Cold-press extraction or conventional extraction using additives, chemical reagents and solvents are also widely used techniques for extracting oils from plant-based or fish-based raw materials. However, due to these chemical reagents and solvents involved, these extraction methods are usually non-environmentally friendly.

CN107653061 discloses, for example, an enzymatic treatment combined with a distillation step, for producing avocado oil. On the other hand, EP1260571 discloses another method for extracting oil from a plant-raw material, such as avocado or olive, wherein the material is subjected to high pressures, followed by a depressurizing step and a centrifugation extraction step. US2020263108 and CN107523416 disclose further processes for oil extraction.

However, those known oil production methods typically require the use of high temperatures, chemical reagents and/or solvents, and/or complex separation methods, many of them involving also a distillation step, for example. Such conditions thus require the use of special equipment which is resistant to such high pressures and temperatures, and this inevitably results in expensive and complex production processes, which in many cases involve the use of reagents and/or solvents which may even be inherently toxic.

Thus, there still exists the need for an alternative solution which may overcome the abovementioned problems, and make it possible to produce oils from plant-based or fish-based raw materials more efficiently, from a yield, cost and energy perspective, and which advantangeously does not require the use of any chemical additive and/or solvent.

### SUMMARY OF THE INVENTION

In a first aspect, it is provided a process for producing oil, wherein said process comprises:
a) feeding a raw material which is plant-based raw material or fish-based raw material into a reaction vessel;
b) subjecting the raw material to a hydrothermal treatment, wherein said hydrothermal treatment comprises:
   - injecting saturated water vapor inside the reaction vessel,
      wherein said injecting is conducted through at least one vapor inlet port, wherein the vapor inlet port is positioned in the lower portion of the reaction vessel,
      wherein the raw material is subjected to stirring during said injection of saturated water vapor, and
      wherein the raw material is also simultaneously subjected to an ultrasonic treatment during said injection of saturated water vapor; and
   - terminating said injection of saturated water vapor when the pressure in the reaction vessel rises to a predetermined pressure in the range from 0.3 to 1.0 MPa and the temperature of the lower portion of the reaction vessel rises to a predetermined temperature, wherein the predetermine pressure and predetermined temperature are set based on the type of raw material;
c) depressurizing the interior of the reaction vessel;
d) discharging the resulting crude product from the reaction vessel through at least one outlet port;
e) extracting the oil from the crude product, wherein the predetermined temperature in step b) is in the range of 25 to 85 °C; wherein the saturated water vapor injected in step b) is subcritical water; and wherein the ultrasonic treatment comprises applying ultrasound waves at a frequency in the range from 20 KHz to 40 KHz.

Described herein is also an oil production apparatus comprising:
a reaction vessel comprising at least one inlet port through which raw material which is plant-based raw material or fish-based raw material is fed, wherein the inlet port is positioned in the upper portion of the reaction vessel, and an outlet port through which crude product is discharged;
a water vapor injecting unit which is configured to inject saturated water vapor through at least one vapor inlet port into the reaction vessel in which the raw material has been fed, wherein the vapor inlet port is positioned in the lower portion of the reaction vessel;
a stirring unit which is configured to stir the raw material content in the reaction vessel;
an ultrasound unit which is configured to subject the raw material content to ultrasound treatment in the reaction vessel;
a temperature sensor positioned at a lower part of the inside of the reaction vessel;
a pressure sensor located at an upper part of the inside of the reaction vessel;
a pressure-regulating unit for regulating pressure inside the reaction vessel;
a control unit which is configured to control driving of the at least one inlet port, the outlet port, the water vapor injecting unit, the stirring unit, the ultrasound unit and the pressure-regulating unit, based on temperature and pressure measured by the temperature sensor or pressure sensor, respectively; and
an auxiliary unit wherein the crude product is discharged from the reaction vessel through the outlet port, and wherein extraction of the oil is performed.

### BRIEF DESCRIPTION OF THE DRAWINGS

**FIG. 1****-** Diagram showing an oil-production apparatus.
**FIG. 2** **-** Diagram showing an oil-production apparatus.
**FIG. 3** **-** Diagram showing an oil-production apparatus.

### DETAILED DESCRIPTION OF THE INVENTION

The invention is defined by the claims.

In a first aspect, it is provided a process for producing oil, such as plant-based oil or fish-based oil. More particularly, it is provided a process for producing oil, wherein said process comprises:
a) feeding a raw material which is plant-based raw material or fish-based raw material into a reaction vessel;
b) subjecting the raw material to a hydrothermal treatment, wherein said hydrothermal treatment comprises:
   - injecting saturated water vapor inside the reaction vessel,
      wherein said injecting is conducted through at least one vapor inlet port, wherein the vapor inlet port is positioned in the lower portion of the reaction vessel,
      wherein the raw material is subjected to stirring during said injection of saturated water vapor, and
      wherein the raw material is also simultaneously subjected to an ultrasonic treatment during said injection of saturated water vapor; and
   - terminating said injection of saturated water vapor when the pressure in the reaction vessel rises to a predetermined pressure in the range from 0.3 to 1.0 MPa and the temperature of the lower portion of the reaction vessel rises to a predetermined temperature, wherein the predetermined pressure and predetermined temperature are set based on the type of raw material;
c) depressurizing the interior of the reaction vessel;
d) discharging the resulting crude product from the reaction vessel through at least one outlet port;
e) extracting the oil from the crude product, wherein the predetermined temperature in step b) is in the range of 25 to 85 °C; wherein the saturated water vapor injected in step b) is subcritical water; and wherein the ultrasonic treatment comprises applying ultrasound waves at a frequency in the range from 20 KHz to 40 KHz**.**

The process of the invention advantageously provides a way to give a second life to fruit or fish which is deemed of insufficient quality to sell as such, or to agricultural or fishery residues, or even to fruit of fish which is in excess of market demands and will eventually also become waste. Thus, it makes it possible to optimize costs associated to starting and running a new orchard or a fish farm, and its associated processing and distributing steps, by using said residues or discarded pieces of fruit or fish for producing oil, which will then advantageously have an added-value due to its properties. Furthermore, the process of the invention allows a more efficient oil production from plant-based or fish-based raw materials, both in terms of higher yields and also reduced costs and energy needed, while advantangeously avoiding the use of any chemical additive and/or solvent.

The relative term "lower portion" or its equivalent, "lower part", is herein defined, in the context of the present invention, as corresponding to a portion of the reaction vessel that is located below a horizontal medial plane of the reaction vessel. The relative term "upper portion" or its equivalent, "upper part", is herein defined, in the context of the present invention, as corresponding to a portion of the reaction vessel that is located above a horizontal medial plane of the reaction vessel. The relative term "middle portion" or its equivalent, "middle part", is herein defined, in the context of the present invention, as corresponding to a portion of the reaction vessel that is located substantially in the horizontal medial plane of the reaction vessel, more specifically, located in the horizontal medial plane of the reaction vessel.

By way of illustration, avocado oil is particularly valued for use as ingredient in salad dressings, in various foods, in cosmetics and even in soap manufacturing, due to its high content of free fatty acids and vitamins. However, avocado trees are known to require significant time and care to produce avocado fruit of desired quality, and are also known to be highly susceptible to diseases such as virus, as well as to extreme weather changes, so it's particularly desirable for fruit industry to have an alternative way of marketing the product or at least any part or derivate thereof, and recover at least part of the original investment, should anything adverse unexpectedly happen. Also, from an environmental perspective, the present process also helps reduce the overall amount of waste.

The expression "hydrothermal treatment" typically refers to a treatment involving heating at elevated pressures of slurries of biomass or organic waste, in the presence of subcritical water. In the context of the present invention, this expression refers to a treatment involving heating at elevated pressures of slurries of plant-based or fish-based raw materials, which may be of residual origin.

The process according to the invention may be either a continuous method or a batch method. Regarding the latter, suitable amounts of raw material to be used may be preferably in the range of 0.5 to 12.0 m³ per batch.

The raw material used in the process according to the invention may be plant-based raw material or fish-based raw material. In one embodiment, said raw material may be plant-based raw material which comprises fruit peel, fruit seeds, fruit pulp, fruit leaves, whole fruit or any mixture thereof. In another embodiment, the raw material may be plant-based raw material comprising fruit peel, fruit seeds, fruit pulp, whole fruit or any mixture thereof. Suitable fruits are preferably selected from the group consisting of avocado, mango, coconut, fig, prickly pear (also known as tuna), lemon, orange, tangerine, grapefruit and any mixture thereof, and are more preferably selected from the group consisting of avocado, mango and coconut. Preferably, the fruit used in the process according to the invention is avocado or mango, more preferably, the fruit is avocado. Said plant-based raw material may be composed of an agricultural residue, in particular, it may be composed of fruit residue.

In a particular embodiment, the raw material used in the process according to the invention may be plant-based raw material which is selected from the group consisting of avocado peel, avocado seeds, avocado pulp, whole avocado or any mixture thereof. In another embodiment, the raw material may be plant-based raw material which is selected from the group consisting of avocado peel, avocado seeds, avocado pulp, whole avocado or any mixture thereof, said raw material being composed of avocado residues.

The raw material may also be plant-based material comprising vegetable seeds, nuts or any mixture thereof. Vegetable seeds may be selected from the group consisting of sunflower seeds, rape seeds, sesame seeds, chia seeds, flax seeds and any mixture thereof. Preferably, said vegetable seeds are selected from the group consisting of sunflower seeds, rape seeds, sesame seeds, chia seeds or any mixture thereof. Suitable nuts may be selected from the group consisting of cashews, peanuts, walnuts, pecans, almonds or any mixture thereof.

The raw material used in the process according to the invention may be fish-based material. The fish-based material may comprise fish heads, fish bones or any mixture thereof. Suitable fish for use as raw material in the method of the invention is selected from the group consisting of tuna, mackerel and bonito. Other types of fish, from which significant amounts of oils rich in fatty acids may be obtained, would also be suitable for the purposes of the present invention. Said fish-based raw material may be composed of fishery residues, in particular, from residual fish heads, fish bones or any mixture thereof. In step b), wherein hydrothermal treatment takes place, the saturated water vapor which is injected in the reaction vessel is water under subcritical conditions. The expression "water under subcritical conditions", or any or its equivalent terms such as "subcritical water", "pressurized hot water", "hot compressed water" or "near-critical water", refers to liquid water which is held by pressure at temperatures between the atmospheric boiling point (100 °C) and the critical temperature (374 °C). When water is heated well above 100 °C, its dielecric constant decreases and its ionic product increases. At 200 °C, the dielectric constant of water is the same as that of room temperature methanol. At 297 °C benzene becomes completely miscible with water. Above 200 °C water may be an acid or base catalyst because its H₃O⁺ and OH⁻ ion concentrations are orders of magnitude higher than in ambient water. Subcritical water has been found to be a much better solvent for hydrophobic organic compounds than ambient water, and may also be used as reagent or catalyst in chemical reactions. Subcritical water extraction technology, based on subcritical water, has been used in recent years for the extraction of active compounds from different biomass materials, such as microalgal biomass (Awaluddin et al BioMed Research International 2016, 1-10). Its use advantageously results in low process costs, mild operating conditions, short process times and environmental sustainability.

In particular, the saturated water vapor injected in step b) comprises or consists of subcritical water.

Thus, the saturated water vapor injected in step b) comprises water at a temperature which is higher than 100 °C but less than 375 °C. In another preferred embodiment, the saturated water vapor injected in step b) may comprise water at a pressure which is less than 22.5 MPa, still more preferably, the saturated water vapor injected in step b) may comprise water at a pressure which is equal to or higher than 1.6 MPa and less than 22.5 MPa. Preferably, the saturated water vapor injected in step b) may comprise water at a temperature higher than 100 °C but less than 375 °C, and at a pressure which is equal to or higher than 1.6 MPa and less than 22.5 MPa.

In still another embodiment, the saturated water vapor injected in step b) consists of water at a temperature higher than 100 °C but less than 375 °C. In another embodiment, the saturated water vapor injected in step b) may consist of water at a pressure which is less than 22.5 MPa, still more preferably, the saturated water vapor injected in step b) may consist of water at a pressure which is equal to or higher than 1.6 MPa and less than 22.5 MPa. Preferably, the saturated water vapor injected in step b) may consist of water at a temperature higher than 100 °C but less than 375 °C, which is more preferably at a pressure which is equal to or higher than 1.6 MPa and less than 22.5 MPa.

The injection of saturated vapor in step b) is conducted through at least one vapor inlet port, wherein the vapor inlet port is positioned in the lower portion of the reaction vessel. In particular, the injection of saturated vapor in step b) may be efficiently conducted through one vapor inlet port which is positioned in the lower portion of the reaction vessel, so that the saturated water vapor, preferably comprising or consisting of subcritical water, directly contacts the raw material mass on entering the reaction vessel. Specifically, it was also advantageously found that, through said direct injection of saturated water vapor into the mass of raw material which is mainly located in the lower portion of the reaction vessel, due to gravity effect, water condensation and thermal transmission were favoured, thus resulting in a more efficient use of already lower pressures compared to those employed in previous known methods.

In a particular embodiment, during step b) of the process according to the first aspect of the invention, the temperature within the reaction vessel, more specifically, at the lower portion of the reaction vessel, wherein at least a portion of the plant-based or fish-based raw material is located, once fed, raises at a temperature rate of around 1-2.5 °C/min, until reaching the predetermined temperature. It will become apparent that a plurality of vapor inlet ports may also be used, said plurality of vapor inlet ports necessarily comprising at least one vapor inlet port which is positioned in the lower portion of the reaction vessel, in order to ensure direct injection of at least a portion of saturated water vapor onto the raw material mass inside the reaction vessel. In a preferred embodiment, the injection of saturated water vapor in step b) may be carried out through a plurality of vapor inlet ports, said plurality of vapor inlet ports comprising at least one vapor inlet port which is positioned in the lower portion of the reaction vessel, and at least one vapor inlet port which is positioned in the upper part of the reaction vessel. Said injection through a plurality of vapor inlet ports may be carried out simultaneously (*i.e*. simultaneous injection of a determined amount of saturated water vapor through all vapor inlet ports), or sequentially (*i.e*. sequential injection of a determined amount of saturated water vapor through each one of vapor inlet ports, wherein said amount may be equal or different for each vapor inlet port). The presence of additional vapor inlet ports in the upper portion of the reaction vessel further helps pressing the raw materials further, thus allowing a higher oil recovery rate. In a particular embodiment, the injection of saturated water vapor in step b) may be carried out through a plurality of vapor inlet ports, said plurality of vapor inlet ports comprising at least one vapor inlet port which is positioned in the lower portion of the reaction vessel, and optionally at least one vapor inlet port which is positioned in the upper part of the reaction vessel and/or at least one vapor inlet port which is positioned in the middle part of the reaction vessel.

According to a particular embodiment of the process of the invention, the injection of saturated water vapor may take place simultaneously through a plurality of vapor inlet ports in step b), said plurality of vapor inlet ports comprising at least one vapor inlet port which is positioned in the lower portion of the reaction vessel, and at least one vapor inlet port which is positioned in the upper part of the reaction vessel, wherein the relative flow rate of saturated water vapor which is injected through the at least one vapor inlet port positioned in the lower portion of the reaction vessel is equal to or higher than 60% of the total flow rate of saturated water vapor injected into the reaction vessel, and the relative flow rate of saturated water vapor which is injected through the at least one vapor inlet port positioned in the upper portion of the reaction vessel is equal to or less than 40% of the total flow rate of saturated water vapor injected into the reaction vessel. Also preferably, the injection of saturated water vapor may take place simultaneously through a plurality of vapor inlet ports in step b), said plurality of vapor inlet ports comprising at least one vapor inlet port which is positioned in the lower portion of the reaction vessel, and at least one vapor inlet port which is positioned in the upper part of the reaction vessel, wherein the relative flow rate of saturated water vapor which is injected through the at least one vapor inlet port positioned in the lower portion of the reaction vessel is equal to or higher than 80% of to the total flow rate of saturated water vapor injected into the reaction vessel, and the relative flow rate of saturated water vapor which is injected through the at least one vapor inlet port positioned in the upper portion of the reaction vessel is equal to or less than 20% of the total flow rate of saturated water vapor injected into the reaction vessel.

In another particular embodiment of the process of the invention, the injection of saturated water vapor in step b) may be carried out through at least one vapor inlet port positioned in the lower portion of the reaction vessel during a first predetermined injection time, wherein said injecting further comprises subsequently injecting saturated water vapor through at least one vapor inlet port positioned in the upper portion of the reaction vessel during a second predetermined injection time.

In still another embodiment, the injection of saturated water vapor in step b) may be carried out only through at least one vapor inlet port positioned in the lower portion of the reaction vessel during a first predetermined injection time, and wherein said injecting further comprises subsequently injecting saturated water vapor simultaneously through the at least one vapor inlet port positioned in the lower portion of the reaction vessel and through at least one vapor inlet port positioned in the upper portion of the reaction vessel during a second predetermined injection time. Preferably, during said second predetermined injection time, the relative flow rate of saturated water vapor which is injected through the at least one vapor inlet port positioned in the lower portion of the reaction vessel is equal to or higher than 80% of to the total flow rate of saturated water vapor injected into the reaction vessel, and the relative flow rate of saturated water vapor which is injected through the at least one vapor inlet port positioned in the upper portion of the reaction vessel is equal to or less than 20% of the total flow rate of saturated water vapor injected into the reaction vessel. By way of illustration, the injection of saturated water vapor in step b) may be carried out only through at least one vapor inlet port positioned in the lower portion of the reaction vessel during a first predetermined injection time until a temperature of 40-50 °C is reached, and then further saturated water vapor may be simultaneously injected through the at least one vapor inlet port positioned in the lower portion of the reaction vessel with a relative flow rate equal to or higher than 80% of the total flow rate of saturated water vapor injected into the reaction vessel, and through at least one vapor inlet port positioned in the upper portion of the reaction vessel with a relative flow rate equal to or less than 20% of the total flow rate of saturated water vapor injected into the reaction vessel, during a second predetermined injection time until the predetermined temperature is reached.

The injection rate of saturated water vapor during the hydrothermal treatment is typically influenced by the maximum working capacity of the boiler used for generating steam. In the process according to the invention, it has been found that vapor injection rates in the range from 200 kg/h to 8,000 kg/h, would be suitable to produce oils with a desirable yield and purity. Thus, in an embodiment, the injection of saturated vapor in step b) may be carried out through at least one vapor inlet port positioned in the lower portion of the reaction vessel during a first predetermined time at a vapor injection rate which is in the range of 200 kg/h to 8,000 kg/h, preferably in the range of 200 kg/h to 2,700 kg/h, wherein said injecting further comprises subsequently injecting saturated vapor through at least one vapor inlet port positioned in the upper portion of the reaction vessel during a second predetermined injection time at a vapor injection rate which is in the range of 200 kg/h to 8,000 kg/h, preferably in the range of 200 kg/h to 2,700 kg/h. In another embodiment, the injection of saturated vapor in step b) may be carried out through at least one vapor inlet port positioned in the lower portion of the reaction vessel during a first predetermined time at a vapor injection rate which is equal to or higher than 1,620 kg/h, wherein said injecting further comprises subsequently injecting saturated vapor through at least one vapor inlet port positioned in the upper portion of the reaction vessel during a second predetermined injection time at a vapor injection rate which is equal to or less than 1,620 kg/h.

The first predetermined injection time may be equal to the second predetermined injection time or, alternatively, they may be different. It will become apparent that predetermined injection times may easily be chosen and/or modified depending also on the vapor injection rate used, wherein typically higher vapor injection rates may require shorter injection times than lower vapor injection rates. In a preferred embodiment, the first predetermined injection time is longer than the second predetermined injection time. More preferably, the first predetermined injection time is at least two times longer than the second predetermined injection time. Still more preferably, the first predetermined injection time is at least three times longer than the second predetermined injection time, and still even more preferably, the first predetermined injection time is at least four times longer than the second predetermined injection time. It will also become apparent that, when a plurality of vapor inlet ports positioned in the upper portion of the reaction vessel was used for injecting saturated water vapor, said injection through each one of them may be carried out during an independent second predetermined injection time, which may be the same or different for each one of these vapor inlet ports, but which in all cases would preferably be shorter than the first predetermined injection time, that is, to the injection time corresponding to the saturated vapor injection being carried out via the at least one vapor inlet port positioned in the lower portion of the reaction vessel. Similarly, when a plurality of vapor inlet ports positioned in the lower portion of the reaction vessel was used for injecting saturated water vapor, said injection through each one of them may be carried out during an independent first predetermined injection time, which may be the same or different for each one of these vapor inlet ports, but which in all cases would preferably be longer than the second predetermined injection time, that is, to the injection time corresponding to the saturated vapor injection being carried out via the at least one vapor inlet port positioned in the upper portion of the reaction vessel.

By injecting said saturated water vapor inside the reaction vessel, which is typically sealed, desired pressure and temperature values may be obtained. These conditions are necessary for effectively break cell membranes of the raw materials, and also for breaking the outer shells of certain plant-based materials, such as vegetable seeds or nuts, by creating a suitable pressure and temperature gradient, thus making it possible to efficiently obtain oil.

Besides, due to the pressure levels used in the process according to the invention being significantly lower than those used in other methods known in the art, the need for special high-pressure resistant materials and configurations is advantageously avoided, thus also reducing costs concerning equipment needed for carrying out the process. For example, a conventional stainless steel cylindrical/tube reactor or reaction vessel may be used. In any case, the reaction vessel used in the process according to the first aspect of the invention may be optionally equipped with an independent heater and/or it may also be equipped with an outer reactor jacket encasing at least a portion of the vessel in order to enhance temperature regulation and/or apply additional heating. In a particular embodiment, the outer reactor jacket may encase at least a portion of the vessel which may be either the upper or the lower portion of the vessel, preferably the lower portion of the vessel. In still another embodiment, the outer reactor jacket may encase the whole vessel. Suitable examples of reactor jackets include, but are not limited to, a plain or single jacket, a half-pipe coil jacket or even a dimple jacket.

The injection of saturated water vapor in the reaction vessel during step b) of the process of the invention is performed until a predetermined pressure in the range from 0.3 to 1.0 MPa and the temperature of the lower portion of the reaction vessel rises to a predetermined temperature, wherein the predetermined pressure and predetermined temperature are set based on the type of raw material. Preferably, said injection may be carried out until a predetermined pressure in the range of 0.3 to 0.9 MPa is reached inside the reaction vessel, and the temperature of the lower portion of the reaction vessel rises to a predetermined temperature, wherein the predetermined pressure and predetermined temperature are set based on the type of raw material. Said predetermined temperature of the lower portion of the reaction vessel will also depend on the type of raw material, but will be in the range from 25 to 85 °C, depending on the type of raw material of choice. During hydrothermal treatment step b), residence time of the raw material in the reactor vessel may preferably be in the range of 1 to 150 minutes. Said residence times were found to be particularly advantageous when using raw material volumes in the range of 0.5 to 12 m³. More preferably, the residence time of the raw material in the reactor vessel during the hydrothermal treatment is in the range of 30 to 80 minutes, still more preferably, in the range of 20 to 80 minutes. The residence time of the raw material in the reactor vessel, during hydrothermal treatment, may also be in the range from 20 to 50 minutes, 25 to 40 minutes, 40 to 70 minutes or even 50 to 70 minutes.

In a particular embodiment, when the raw material is plant-based raw material comprising avocado pulp, saturated water vapor may be preferably injected, in step b), up to a predetermined pressure in the range from 0.3 to 0.6 MPa. For this particular embodiment, the residence time of the plant raw material in the reactor vessel during the hydrothermal treatment may preferably in the range from 20 to 50 minutes, more preferably in the range from 20 to 45minutes, or still more preferably in the range from 25 to 40 minutes. When the raw material is plant-based raw material comprising avocado pulp, the predetermined temperature of the lower portion of the reaction vessel will preferably be in the range from 27 to 45 °C.

When the raw material is plant-based raw material comprising avocado seeds, or, alternatively, is plant-based raw material comprising mango seeds, the saturated water vapor may be preferably injected, in step b), up to a predetermined pressure in the range from 0.4 to 0.9 MPa, more preferably, up to a predetermined pressure in the range from 0.6 to 0.9 MPa, or still more preferably, up to a predetermined pressure in the range from 0.7 to 0.9 MPa. In a particular embodiment, when the plant-based raw material comprises mango seeds, the predetermined pressure may be in the range from 0.8 to 0.9 MPa. For these particular embodiments, the residence time of the plant raw material in the reactor vessel during the hydrothermal treatment may preferably be in the range from 30 to 80 minutes, still more preferably, in the range from 40 to 70 minutes, or still even more preferably, in the range from 60 to 70 minutes. When the raw material is plant-based raw material comprising either avocado seeds or mango seeds, the predetermined temperature of the lower portion of the reaction vessel will preferably be in the range from 80 to 85 °C.

In another particular embodiment, when the raw material is plant-based raw material comprising avocado seeds, avocado pulp and avocado peel, the saturated water vapor may be preferably injected, in step b), up to a predetermined pressure in the range from 0.4 to 0.9 MPa, more preferably, up to a predetermined pressure in the range from 0.6 to 0.9 MPa, or up to a predetermined pressure in the range from 0.5 to 0.7 MPa. For these particular embodiments, residence time of the plant raw material in the reactor vessel during hydrothermal treatment may preferably be in the range from 30 to 80 minutes, still more preferably, in the range from 40 to 70 minutes or from 30 to 40 minutes. In a preferred embodiment, the predetermined temperature of the lower portion of the reaction vessel will preferably be in the range from 60 to 85 °C.

Still in another embodiment, when the raw material is plant-based raw material comprising vegetable seeds, in particular, sesame seeds, the saturated water vapor may be preferably injected, in step b), up to a predetermined pressure in the range from 0.4 to 0.9 MPa, more preferably, up to a predetermined pressure in the range from 0.6 to 0.7 MPa. For this particular embodiment, residence time of the plant raw material in the reactor vessel during the hydrothermal treatment may preferably in the range from 30 to 80 minutes, still more preferably, in the range from 40 to 70 minutes, still even more preferably, in the range from 50 to 70 minutes, or still even much more preferably, in the range from 45 to 55 minutes. In a preferred embodiment, the predetermined temperature of the lower portion of the reaction vessel will preferably be in the range from 60 to 75 °C.

Stirring in step b) advantageously ensures the homogeneous application of the hydrothermal treatment in the raw material, and also allows pressure regulation inside the vessel. Thus, by increasing or reducing rotational speed, it is possible to further regulate pressure. Said stirring may be carried out by blade means which extend in the longitudinal direction in the reaction vessel. Said blade means may comprise a horizontal rotation shaft which is rotatably supported, and at least one stirring blade which is attached to the horizontal rotation shaft. Preferably, stirring in step b) of the process may be carried out by blade means extending in the longitudinal direction in the reaction vessel, wherein the blade means comprise a horizontal rotation shaft which is rotatably supported, and at least one stirring blade which is attached to the horizontal rotation shaft. Preferably, the stirring blade is a rotatable blade. More preferably, the stirring blade is a rotatable blade that may rotate at a rotational speed of 1 to 120 rpm. Still more preferably, the stirring blade is a rotatable blade that may rotate at a rotational speed of 1 to 100 rpm, even more preferably, at a rotational speed of 1 to 80 rpm, still even more preferably, at a rotational speed of 5 to 70 rpm, and still even much more preferably, at a rotational speed of 5 to 50 rpm or 5 to 40 rpm. In still another preferred embodiment, the stirring blade is a rotatable blade that may rotate at a rotational speed of 7 to 12 rpm, of 8 to 14 rpm, or of 10 to 16 rpm. It will become apparent that said rotation may be carried out in either clockwise direction (*i.e*. forward rotation direction) or counterclockwise direction (*i.e*. reverse rotation direction). Said rotatable speed may also be easily selected, within the above preferred rotation speed values, based on the raw material quantity employed.

According to a particular embodiment, step b) of the process may further comprise an additional step, prior to terminating the injection of the saturated water vapor, wherein, when the temperature of the lower portion of the reaction vessel rises to the predetermined temperature, which is set based on the type of raw material, stirring is terminated. This may advantageously be carried out in order to further help increase pressure inside the reaction vessel, up to the point wherein the predetermined pressure is reached, based on the type of raw material. Thus, stirring in step b) may be discontinuous, more preferably, it may be discontinuous in a way such that, once the predetermined temperature is reached, stirring is terminated. In another embodiment, stirring in step b) may be terminated when the predetermined temperature and predetermined pressure are reached. In a particular embodiment, wherein stirring is carried out by means of blade means extending in the longitudinal direction in the reaction vessel, wherein the blade means comprise a horizontal rotation shaft which is rotatably supported, and at least one stirring blade which is attached to the horizontal rotation shaft, termination of stirring is to be understood as stopping rotation of the horizontal rotation shaft, so that blades also no longer rotate.

In the process of the invention, the raw material is subject to stirring and also to an ultrasonic treatment, while the injection of saturated water vapor takes place. The ultrasonic treatment comprises applying ultrasound waves at a frequency in the range from 20 KHz to 40 KHz or, more preferably, at a frequency in the range from 20 KHz to 30 KHz. Said ultrasonic treatment may be carried out by means of any suitable device known in the art for generating ultrasound waves. In a preferred embodiment, the ultrasonic treatment may be carried out by means of at least one piezoelectric transducer. Said at least one piezoelectric transducer may preferably be positioned in the inner lower portion of the reaction vessel, thus being in direct contact with the raw material mass. It will become apparent that any number of piezoelectric transducers may be used, said number being also dependent on the total volume of the vessel and the mass of raw material which is being subjected to hydrothermal treatment for producing oil.

Thus, the process according to the invention may comprise, in step b), that the raw material is subjected to an ultrasonic treatment during the injection of saturated water vapor, wherein said ultrasonic treatment may be carried out by means of a plurality of piezoelectric transducers, of which at least one piezoelectric transducer is positioned in the inner lower portion of the reaction vessel. In another embodiment, the ultrasonic treatment may be carried out by means of two piezoelectric transducers which are positioned in the inner lower portion of the reaction vessel at two different positions between a central horizontal plane and a central vertical plane of the reaction vessel. In still another embodiment, the ultrasonic treatment may be carried out by means of four piezoelectric transducers which are positioned in the inner lower portion of the reaction vessel at four different positions between a central horizontal plane and a central vertical plane of the reaction vessel, wherein two of said piezoelectric transducers are positioned in a rear portion of the reaction vessel, and two of said piezoelectric transducers are positioned in a front portion of the reaction vessel.

Saturated water vapor injection in step b) is terminated when the pressure in the reaction vessel rises up to a predetermined pressure value, and the temperature in the lower portion of the reaction vessel rises up to a predetermined temperature, which is set based on the chosen raw material. In the process of the invention, the predetermined temperature in step b) is in the range of 25 to 85 °C, said temperature being set based on the type of raw material.

The process of the invention may also advantageously comprise a preliminary step, wherein the raw material is comminuted before being fed into the reaction vessel. In particular, the raw material may preferably be comminuted into particles of average size in the range from 6 to 12 mm, more preferably into particles of average size in the range from 8 to 10 mm, before being fed into the reaction vessel. This comminution advantageously increases particle surface, so once inside the reaction vessel, it may provide increased contact with the hot saturated water vapor being injected, thus enhancing hydrothermal treatment efficiency further, so that lower residence times and/or pressures would be necessary.

Step e) of the process according to the invention comprises extracting the oil from the crude product resulting from hydrothermal treatment, which has been discharged from the reaction vessel through at least one outlet port in step d) after depressurization has been carried out in step c). Step e) may optionally comprise first adding a determined amount of water to the crude product in a water-to-crude-product ratio in the range of 1:0.3 to 1:2 by weight. In this process according to the first aspect, it was advantageously found that there was no need to either use oxygen-free conditions during extraction process step e) or work under inert atmosphere.

Described herein is oil obtained or obtainable by the process according to the first aspect of the invention, wherein said oil is plant-based oil or fish-based oil. The oil may be plant-based oil or fish-based oil, depending on whether plant-based raw material or fish-based raw material, respectively, was used in the process according to the first aspect.

The oil may be a plant-based oil, more preferably, it may be a plant-based oil selected from avocado oil, mango oil and coconut oil. More preferably, the oil may be avocado oil.

The oil may be vegetable oil, more particularly, seed oil selected from the group consisting of sunflower seed oil, rape seed oil, sesame seed oil, flax seed oil and chia seed oil.

The oil may be seed oil selected from the group consisting of sunflower seed oil, rape seed oil, sesame seed oil and chia seed oil.

The oil may be vegetable oil which is nut-based oil, said oil being preferably selected from the group consisting of cashew oil, peanut oil, walnut oil, pecan oil and almond oil.

The oil obtained or obtainable by the process according to the first aspect of the invention may be fish oil. Fish oils are particularly useful as food additives, or even as food supplements, due to the significantly high content of omega-3 fatty acids, in particular, alpha-linolenic acid (ALA), eicosapentanoic acid (EPA) and docosahexaenoic acid (DHA). In a particular embodiment, the oil may be tuna oil, mackerel oil or bonito oil.

When the raw material is plant-based raw material comprising avocado seeds, or, alternatively, is plant-based raw material comprising mango seeds, saturated water vapor may be preferably injected, in step b), up to a predetermined pressure in the range from 0.4 to 0.9 MPa, more preferably, up to a predetermined pressure in the range from 0.6 to 0.9 MPa. In a particular embodiment, when the plant-based raw material comprises mango seeds, the predetermined pressure may be in the range from 0.8 to 0.9 MPa. For these particular embodiments, the residence time of the plant raw material in the reactor vessel during the hydrothermal treatment may preferably be in the range from 30 to 80 minutes or in the range from 40 to 70 minutes, and optionally the predetermined temperature of the lower portion of the reaction vessel will preferably be in the range from 80 to 85 °C.

In another particular embodiment, when the raw material is plant-based raw material comprising avocado seeds avocado pulp and avocado peel, the saturated water vapor may be preferably injected, in step b), up to a predetermined pressure in the range from 0.4 to 0.9 MPa, more preferably, up to a predetermined pressure in the range from 0.6 to 0.9 MPa, or up to a predetermined pressure in the range from 0.5 to 0.7 MPa. For these particular embodiments, the residence time of the plant raw material in the reactor vessel during the hydrothermal treatment may preferably be in the range from 30 to 80 minutes or in the range from 40 to 70 minutes or from 30 to 40 minutes. In a preferred embodiment, the predetermined temperature of the lower portion of the reaction vessel will preferably be in the range from 60 to 85 °C.

When the raw material is plant-based raw material comprising vegetable seeds, the saturated water vapor may be preferably injected, in step b), up to a predetermined pressure in the range from 0.4 to 0.9 MPa. For this particular embodiment, the residence time of the plant raw material in the reactor vessel during the hydrothermal treatment may preferably be in the range from 30 to 80 minutes, or still more preferably, in the range from 40 to 70 minutes, in the range from 50 to 70 minutes, or in the range from 45 to 55 minutes. In a preferred embodiment, the predetermined temperature of the lower portion of the reaction vessel will preferably be in the range from 60 to 75 °C.

The properties of the oil obtained by the process according to the first aspect of the invention are influenced by the process conditions, and may be easily tailored by modifying certain parameters of the process, preferably, by selecting a specific predetermined temperature and residence time, or even the particular nature of the plant-based or fish-based material used. Based on these, it is possible to modify the properties of resulting oil and produce crude oil, virgin oil, or extra-virgin oil.

Crude oil, specifically crude avocado oil, may be obtained by the process according to the first aspect of the invention wherein, in step b), the saturated water vapor is injected up to a predetermined pressure in the range from 0.4 to 0.9 MPa, preferably, in the range from 0.6 to 0.9 MPa. Still more preferably, said crude oil is obtained by the process wherein, in step b), the saturated water vapor is injected up to a predetermined pressure in the range from 0.4 to 0.9 MPa, more preferably, in the range from 0.5 to 0.7 MPa, and wherein the residence time of the plant raw material in the reactor vessel during the hydrothermal treatment is in the range from 30 to 80 minutes, more preferably, in the range from 40 to 70 minutes, or from 30 to 40 minutes. Still even more preferably, crude avocado oil may be obtained according to the process of the first aspect, under the preferred conditions indicated above, wherein the raw material is a mixture of avocado seeds, avocado pulp and avocado peel. For the purposes of producing this crude avocado oil, the predetermined temperature in step b) may preferably be in the range from 50 to 80 °C, more preferably, in the range from 55 to 75 °C, still more preferably, in the range from 60 to 85 °C. Thus, in a particular preferred embodiment, crude oil, in particular, crude avocado oil, may be obtained by the process according to the first aspect of the invention, wherein in step b), the saturated water vapor is injected up to a predetermined pressure in the range from 0.4 to 0.9 MPa, the residence time of the plant raw material in the reactor vessel during the hydrothermal treatment is in the range from 30 to 80 minutes, and the predetermined temperature is in the range from 50 to 80 °C. In still another preferred embodiment, crude oil, in particular, crude avocado oil, may be obtained by the process according to the first aspect of the invention, wherein in step b), saturated water vapor is injected up to a predetermined pressure in the range from 0.5 to 0.7 MPa, residence time of the plant raw material in the reactor vessel during the hydrothermal treatment is in the range from 30 to 40 minutes, and predetermined temperature is in the range from 50 to 80 °C. In another embodiment, crude oil, in particular, crude avocado oil, may be obtained by the process according to the first aspect of the invention, wherein in step b), saturated water vapor is injected up to a predetermined pressure in the range from 0.5 to 0.7 MPa, residence time of the plant raw material in the reactor vessel during the hydrothermal treatment is in the range from 30 to 40 minutes, and predetermined temperature is in the range from 60 to 85 °C.

Virgin oil, in particular avocado virgin oil, may be obtained by the process according to the first aspect of the invention wherein, in step b), the saturated water vapor is injected up to a predetermined pressure in the range from 0.4 to 0.9 MPa. Still more preferably, said virgin oil is obtained by the process wherein, in step b), the saturated water vapor is injected up to a predetermined pressure in the range from 0.4 to 0.6 MPa, or from 0.3 to 0.5 MPa, and wherein the residence time of the plant raw material in the reactor vessel during the hydrothermal treatment is in the range from 20 to 50 minutes, more preferably, in the range from 25 to 40 minutes. Still even more preferably, avocado virgin oil may be obtained according to the first aspect, wherein the raw material is avocado pulp. Suitable pulps useful for producing such virgin oil, such as avocado virgin oil, include pulps found at any maduration stage, thus not excluding pulps from fruit which is not ripe yet, neither those of fruit which has been partly damaged during transport, for example. For the purposes of producing virgin oil, such as avocado virgin oil, predetermined temperature in step b) may preferably be in the range from 40 to 45 °C.

Extra virgin oil, in particular avocado extra virgin oil, may be obtained by the process according to the first aspect of the invention wherein, in step b), the saturated water vapor is injected up to a predetermined pressure in the range from 0.3 to 0.6 MPa, more preferably, to a predetermined pressure in the range from 0.3 to 0.4 MPa, still more preferably, to a predetermined pressure in the range from 0.3 to 0.5 MPa. Still more preferably, said extra virgin oil is obtained by the process wherein, in step b), the saturated water vapor is injected up to a predetermined pressure in the range from 0.3 to 0.6 MPa, and wherein the residence time of the plant raw material in the reactor vessel during the hydrothermal treatment is in the range from 20 to 45 minutes, more preferably, in the range from 25 to 40 minutes, still more preferably, in the range from 30 to 40 minutes, or in the range from 35 to 45 minutes. Still even more preferably, avocado extra virgin oil may be obtained according to the first aspect using avocado pulp as raw material. For the purposes of producing extra virgin oil, predetermined temperature in step b) may preferably be in the range from 27 to 30 °C. Thus, in a particular preferred embodiment, extra virgin oil, in particular, avocado extra virgin oil, is obtained by the process according to the first aspect of the invention, wherein in step b), the saturated water vapor is injected up to a predetermined pressure in the range from 0.3 to 0.6 MPa, the residence time of the plant raw material in the reactor vessel during the hydrothermal treatment is in the range from 20 to 45 minutes, and the predetermined temperature is in the range from 27 to 30 °C. In still another preferred embodiment, extra virgin oil, in particular, avocado extra virgin oil, is obtained by the process according to the first aspect of the invention, wherein in step b), the saturated water vapor is injected up to a predetermined pressure in the range from 0.3 to 0.6 MPa, the residence time of the plant raw material in the reactor vessel during the hydrothermal treatment is in the range from 25 to 45 minutes, and the predetermined temperature is in the range from 27 to 30 °C. In another preferred embodiment, extra virgin oil, in particular, avocado extra virgin oil, is obtained by the process according to the first aspect of the invention, wherein in step b), the saturated water vapor is injected up to a predetermined pressure in the range from 0.3 to 0.6 MPa, the residence time of the plant raw material in the reactor vessel during the hydrothermal treatment is in the range from 35 to 45 minutes, and the predetermined temperature is in the range from 27 to 30 °C.

Mango oil or avocado pit oil may be obtained by the process according to the first aspect of the invention wherein, in step b), the saturated water vapor is injected up to a predetermined pressure in the range from 0.7 to 0.9 MPa. Still more preferably, said mango or avocado pit oil is obtained by the process wherein, in step b), the saturated water vapor is injected up to a predetermined pressure in the range from 0.8 to 0.9 MPa, and wherein the residence time of the plant raw material in the reactor vessel during the hydrothermal treatment is in the range from 50 to 70 minutes. Still even more preferably, mango oil or avocado pit oil may be obtained according to the first aspect, wherein the raw material are mango seeds or avocado seeds, respectively. For the purposes of producing mango oil or avocado pit oil, predetermined temperature in step b) may be in the range from 80 to 85 °C.

In this description, an oil production apparatus which is particularly designed for use in the process according to the first aspect of the invention is provided.

Described is an oil production apparatus comprising:
a reaction vessel comprising:
   - at least one inlet port through which raw material which is plant-based raw material or fish-based raw material is fed, wherein the inlet port is positioned in the upper portion of the reaction vessel, and
   - an outlet port through which crude product is discharged;
a water vapor injecting unit which is configured to inject saturated water vapor through at least one vapor inlet port into the reaction vessel in which the raw material has been fed, wherein the vapor inlet port is positioned in the lower portion of the reaction vessel;
a stirring unit which is configured to stir the raw material content in the reaction vessel;
an ultrasound unit which is configured to subject the raw material content to ultrasound treatment in the reaction vessel;
a temperature sensor positioned at a lower part of the inside of the reaction vessel;
a pressure sensor located at an upper part of the inside of the reaction vessel;
a pressure-regulating unit for regulating pressure inside the reaction vessel;
a control unit which is configured to control driving of the at least one inlet port, the outlet port, the water vapor injecting unit, the stirring unit, the ultrasound unit and the pressure-regulating unit, based on temperature and pressure measured by the temperature sensor or pressure sensor, respectively; and
an auxiliary unit wherein the crude product is discharged from the reaction vessel through the outlet port, and wherein extraction of the oil is performed.

Due to the pressure levels used in the process according to the invention being significantly lower than those used in other methods known in the art, the need for special high-pressure resistant materials and configurations is advantageously avoided, thus also reducing costs concerning equipment needed for carrying out the process. For example, a conventional stainless steel cylindrical/tube reactor or reaction vessel may be used.

The raw material which is being fed to the reaction vessel through the at least one inlet port may be plant-based raw material which comprises fruit peel, fruit seeds, fruit pulp, fruit leaves, whole fruit or any mixture thereof. In another embodiment, the raw material may be plant-based raw material comprising fruit peel, fruit seeds, fruit pulp, whole fruit or any mixture thereof. Suitable fruits are preferably selected from the group consisting of avocado, mango, coconut, fig, prickly pear, lemon, orange, tangerine, grapefruit and any mixture thereof, and are more preferably selected from the group consisting of avocado, mango and coconut. In a preferred embodiment, the fruit used in the process according to the invention is avocado or mango, more preferably, the fruit is avocado. Said plant-based raw material may be composed of an agricultural residue, in particular, it may be composed of fruit residue.

In a particular embodiment, the raw material fed to the reaction vessel through the at least one inlet port may be plant-based raw material which is selected from the group consisting of avocado peel, avocado seeds, avocado pulp, whole avocado or any mixture thereof. In another embodiment, the raw material may be plant-based raw material which is selected from the group consisting of avocado peel, avocado seeds, avocado pulp, whole avocado or any mixture thereof, said raw material being composed of plant-based agricultural residues.

The raw material may also be plant-based material comprising vegetable seeds, nuts or any mixture thereof. Vegetable seeds may be selected from the group consisting of sunflower seeds, rape seeds, sesame seeds, chia seeds, flax seeds or any mixture thereof. Preferably, said vegetable seeds are selected from the group consisting of sunflower seeds, rape seeds, sesame seeds, chia seeds or any mixture thereof. Suitable nuts may be selected from the group consisting of cashews, peanuts, walnuts, pecans, almonds or any mixture thereof.

According to another embodiment, the raw material fed to the reaction vessel through the at least one inlet port may be fish-based material. The fish-based material may comprise fish heads, fish bones or any mixture thereof. Suitable fish for use as raw material in the method of the invention is selected from the group consisting of tuna, mackerel and bonito. Other different types of fish, from which significant amounts of oils rich in fatty acids may be obtained, would also be suitable for the purposes of the present invention. Said fish-based raw material may be composed of fishery residues, in particular, from residual fish heads, fish bones or any mixture thereof.

The water vapor injecting unit is configured to inject saturated water vapor through at least one vapor inlet port which is positioned in the lower portion of the reaction vessel, wherein said water is preferably subcritical water. Preferably, the saturated water vapor injected via the water vapor injecting unit may comprise or consist of water at a pressure which is equal to or higher than 1.6 MPa and less than 22.5 MPa. Preferably, the saturated water vapor injected via the water vapor injecting unit may comprise or consist of water at a temperature higher than 100 °C but less than 375 °C, which is optionally more preferably at a pressure which is equal to or higher than 1.6 MPa and less than 22.5 MPa. In particular, the saturated water vapor injected via the water vapor injecting unit may comprise or consist of subcritical water.

The water vapor injecting unit may be configured to inject saturated water vapor through a plurality of vapor inlet ports into the reaction vessel in which the raw material has been fed, said plurality of vapor inlet ports comprising at least one vapor inlet port which is positioned in the lower portion of the reaction vessel, and at least one vapor inlet port which is positioned in the upper part of the reaction vessel. The water vapor injecting unit may preferably comprise a boiler for generating high-pressure water vapor, more particularly, saturated water vapor, preferably subcritical water. It further comprises a vapor conduit which connects the boiler with the reaction vessel, thus supplying the corresponding saturated water vapor. The pressure of saturated water vapor generated in the boiler is preferably maintained at a constant value, and pressure inside the reaction vessel may be controlled by adjusting the pressure rate injected into the vessel by means of a regulating water vapor valve, which is in fluid communication with the boiler and the reaction vessel by means of the vapor conduit. It will become apparent that, when a plurality of vapor inlet ports is used, pressure rate injected through each one of them may be regulated by means of an independent regulating water vapor valve for each one of them, so that in each individual pressure rate which is being injected into the vessel may be adjusted or controlled.

The stirring unit, which is configured to stir the raw material content in the reaction vessel, may preferably comprise blade means which extend in the longitudinal direction in the reaction vessel. Still more preferably, the stirring unit may comprise blade means extending in the longitudinal direction in the reaction vessel, wherein the blade means comprise a horizontal rotation shaft which is rotatably supported, and at least one stirring blade which is attached to the horizontal rotation shaft. Preferably, the stirring blade is a rotatable blade. In another embodiment, the stirring unit may comprise blade means extending in the longitudinal direction in the reaction vessel, wherein the blade means comprise a horizontal rotation shaft which is rotatably supported, and at least one stirring blade which is attached to the horizontal rotation shaft, said at least one stirring blade being configured to rotate at a rotational speed of 1 to 120 rpm, preferably, at a rotational speed of 1 to 100 rpm, even more preferably, at a rotational speed of 1 to 80 rpm, still even more preferably, at a rotational speed of 5 to 70 rpm, and still even much more preferably, at a rotational speed of 5 to 50 rpm or 5 to 40 rpm. Said stirring unit typically comprises a drive motor, which is connected to the horizontal rotation shaft, and wherein the stirring means, in particular, the at least one stirring blade, are configured to be rotationally driven by the drive motor, either in either clockwise direction (*i.e*. forward rotation direction) or counterclockwise direction (*i.e*. reverse rotation direction). The stirring unit may further comprise two closure means, which improve stability of the stirring unit, specifically, of the horizontal rotation shaft, by fastening each one of the horizontal rotation shaft ends to the reaction vessel ends. These closure means may advantageously reduce additional vibration of the horizontal rotation shaft during stirring, thus improving stirring efficiency.

The ultrasound unit preferably comprises at least one piezoelectric transducer which is positioned in the inner lower portion of the reaction vessel. In another embodiment, the ultrasound unit may comprise a plurality of piezoelectric transducers, of which at least one piezoelectric transducer is positioned in the inner lower portion of the reaction vessel. Preferably, the ultrasound unit may comprise two piezoelectric transducers which are positioned in the inner lower portion of the reaction vessel at two different positions between a central horizontal plane and a central vertical plane of the reaction vessel. In another preferred embodiment, the ultrasound unit may comprise four piezoelectric transducers which are positioned in the inner lower portion of the reaction vessel at four different positions between a central horizontal plane and a central vertical plane of the reaction vessel, wherein two of said piezoelectric transducers are positioned in a rear portion of the reaction vessel, and two of said piezoelectric transducers are positioned in a front portion of the reaction vessel.

The temperature sensor is provided in the lower part of the inside of the reaction vessel, thus making it possible to measure temperature of the lower levels of the raw material mass which is being processed. This sensor efficiently allows monitoring of the temperature of the raw material mass, which is typically placed in the lower portion of the reaction vessel due to gravity, thus making it possible to ensure that the material is at the desired temperature. In another embodiment, the oil production apparatus may comprise further temperature sensors, which may be located in other parts of the inside of the reaction vessel. In a preferred embodiment, the oil production apparatus comprises a plurality of temperature sensors, wherein at least one temperature sensor is provided in the lower part of the inside of the reaction vessel, and which further comprises at least one temperature sensor which is positioned in the center of the inside of the reaction vessel, or in the upper part of the inside of the reaction vessel. In another preferred embodiment, the oil production apparatus comprises a plurality of temperature sensors, wherein at least one temperature sensor is provided in the lower part of the inside of the reaction vessel, and which further comprises at least one temperature sensor which is positioned in the center of the inside of the reaction vessel, and at least one temperature sensor which is positioned in the upper part of the inside of the reaction vessel. In still another preferred embodiment, the oil production apparatus comprises a plurality of temperature sensors, wherein at least two temperature sensors are provided in the lower part of the inside of the reaction vessel, and which further comprises at least one temperature sensor which is positioned in the center of the inside of the reaction vessel, and at least one temperature sensor which is positioned in the upper part of the inside of the reaction vessel. The optional addition of further temperature sensors at the middle and/or upper parts of the inside of the reaction vessel, advantageously provides a way to more finaly control and tune, if necessary, the temperature of the entire mass of raw product.

The pressure-regulating unit for regulating pressure inside the reaction vessel may comprise at least one pressure adjusting valve, and optionally an outlet opening for discharging water vapor if necessary. In another embodiment, the pressure-regulating unit may comprise a plurality of pressure adjusting valves, optionally also comprising an outlet opening for discharging water vapor. Thus, when the temperature inside the reaction vessel exceeds a predetermined value, the pressure adjusting valve may be opened, thus releasing the pressure inside the reaction vessel so that it is depressurized. The control unit is preferably electrically connected to the at least one inlet port, the outlet port, the water vapor injecting unit, the stirring unit, the ultrasound unit and the pressure-regulating unit, as well as to the temperature sensor(s) and the pressure sensor(s) inside the reaction vessel, thus being able to receive the corresponding signals from the sensors, and to control the water vapor injecting unit, the stirring unit, the ultrasound unit and the pressure-regulating unit. Thus, the control unit, may also control de rotation direction and speed of the stirring unit, so it may control the start and stop of said stirring unit, thus controlling the stirring of the raw material inside the reaction vessel. Also, by receiving the pressure and temperature values as recorded by the pressure and temperature sensor, respectively, the control unit may control, i.e. stop, the saturated water vapor being injected, should the temperature and/or the pressure reach the predetermined value(s), or may also control the pressure-regulating unit, thus making it possible to further increase pressure when, for example, the temperature has reached a predetermined value and stirring is stopped. In particular, the control unit may control all electric systems present in the reactor.

The oil apparatus may be optionally equipped with an independent heater and/or an outer reactor jacket encasing the vessel in order to enhance temperature regulation and/or apply additional heating. Suitable examples of reactor jackets include, but are not limited to, a plain or single jacket, a half-pipe coil jacket or even a dimple jacket. Furthermore, the auxiliary unit of the oil production apparatus may comprise a solid-liquid separating unit, for separating solids such as foreign bodies or undesired slurries from the liquid. Said auxiliary unit may optionally further comprise a water-removing unit for removing water from the liquid after separating the solids in the solid-liquid separating unit. This water removal makes it possible to eventually recover the desired oil.

Hereinafter, the oil production apparatus will be described with reference to the drawings.

### List of reference signs used throughout description and/or drawings:

1: oil producing apparatus
2: reaction vessel
3a: (raw material) inlet port
3b: (raw material) outlet port
4: water vapor injecting unit - 4a: boiler; 4b: vapor conduit; 4c: water vapor controlling valve
5a: vapor inlet port
6: stirring unit - 6a: horizontal rotation shaft; 6b: stirring blade(s); 6c: drive motor; 6d: closure means
7: ultrasound unit - 7a: piezoelectric transducer(s)
8a, 8b, 8c: temperature sensors
9a: pressure sensor
10: pressure - regulating unit - 10a: pressure adjusting valve; 10b: (water vapor) outlet opening
11: control unit
12: auxiliary unit -12a: solid-liquid separating unit; 12b: water-removing unit
13: outer reactor jacket

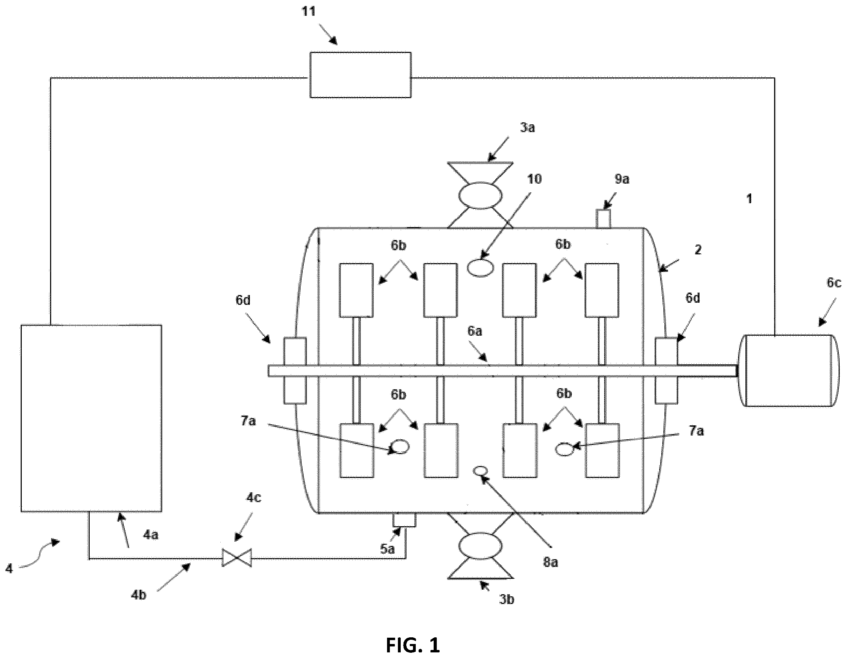

The oil production apparatus 1 according to FIG. 1 comprises:
a reaction vessel 2 comprising at least one inlet port 3a through which raw material which is plant-based raw material or fish-based raw material is fed, wherein the inlet port 3a is positioned in the upper portion of the reaction vessel 2, and an outlet port 3b through which crude product is discharged;
a water vapor injecting unit 4 which is configured to inject saturated water vapor through at least one vapor inlet port 5a into the reaction vessel in which the raw material has been fed, wherein the vapor inlet port 5a is positioned in the lower portion of the reaction vessel 2;
a stirring unit 6 which is configured to stir the raw material content in the reaction vessel 2;
an ultrasound unit 7 which is configured to subject the raw material content to ultrasound treatment in the reaction vessel 2;
a temperature sensor 8a positioned at a lower part of the inside of the reaction vessel 2;
a pressure sensor 9a located at an upper part of the inside of the reaction vessel 2;
a pressure-regulating unit 10 for regulating pressure inside the reaction vessel 2;
a control unit 11 which is configured to control driving of the at least one inlet port 3a, the outlet port 3b, the water vapor injecting unit 4, the stirring unit 6, the ultrasound unit 7 and the pressure-regulating unit 9, based on temperature and pressure measured by the temperature sensor 8a or the pressure sensor, 9a, respectively; and
an auxiliary unit 12 (not shown in FIG. 1) wherein the crude product is discharged from the reaction vessel 2 through the outlet port 3b, and wherein extraction of the oil is performed.

The reaction vessel 2 has a determined pressure and temperature resistance, and is typically a first-class pressure vessel, wherein the raw material which is plant-based raw material or fish-based raw material, is processed inside. The working pressure of this reaction vessel 2 is 0.3 to 1.0 MPa, so any vessel that may withstand such pressure range may be used. Due to these working pressure range which is involves equal to or less than 1.0 MPa of saturated water vapor pressure, the process according to the inventions does not require the use of any vessel with high pressure-resistance specifications, and so conventional reaction vessels may be used. In the embodiments depicted in the figures, the reaction vessel 2 is additionally equipped with an outer reactor jacket 13 (not shown in FIG. 1) encasing the vessel which enables temperature regulation and/or additional heating application which may take advantage of the water vapor generated during the use of the apparatus. Said reactor jacket 13 is also controlled by thecontrol unit 11.

In the apparatus depicted in FIG. 1, the upper part of the reaction vessel 2 is provided with at least one inlet port 3a, through which which raw material which is plant-based raw material or fish-based raw material is fed. The lower part of the reaction vessel 2 is provided with at least one outlet port 3b through which the crude product (*i.e*. product which still requires solid-liquid separation and water removal in order to isolate the oil of interest) is discharged after hydrothermal treatment completion. Inlet port 3a and outlet port 3b preferably comprise an interlock control structure for safety purposes, and a valve element which is closed when hydrothermal treatment of the raw material mass inside the reaction vessel 2 takes place.

The vapor injecting unit 4 is configured to inject saturated water vapor through at least one vapor inlet port 5a into the reaction vessel in which the raw material has been fed, wherein the vapor inlet port 5a is positioned in the lower portion of the reaction vessel 2. Said vapor injecting unit 4 comprises a boiler 4a for generating high-pressure water vapor, more particularly, saturated water vapor, preferably under subcritical conditions. The vapor injecting unit 4 further comprises a vapor conduit 4b which connects the boiler 4a with the reaction vessel 2, thus supplying the corresponding saturated water vapor, preferably under subcritical conditions (*i.e*. subcritical water). The pressure of the saturated water vapor generated in the boiler 4a is maintained at a constant value, and pressure inside the reaction vessel 2 may be controlled by adjusting the pressure rate injected into the vessel 2, by regulating water vapor valve 4c. Said water vapor valve 4c is typically controlled by means of the control unit 11, to which it may also be electrically connected.

The stirring unit 6 stirs the raw material content in the reaction vessel 2 in a substantially uniform way, and comprises comprise blade means extending in the longitudinal direction in the reaction vessel 2, said blade means comprising a horizontal rotation shaft 6a which is rotatably supported, and a plurality of stirring blades 6b which are attached to the horizontal rotation shaft. Additionally, the stirring unit comprises a drive motor 6c which is connected to the horizontal rotation shaft 6a, wherein the stirring means 6, specifically, the plurality of stirring blades 6b, are configured to be rotationally driven by the drive motor 6c, either in either clockwise direction or counterclockwise direction. The stirring unit 6 further comprises two closure means 6d, which improve stability of the stirring unit, specifically, the stability of the horizontal rotation shaft, by fastening each one of the horizontal rotation shaft ends to the reaction vessel ends.

The ultrasound unit 7 (general feature 7 not shown in FIG. 1) is configured to subject the raw material mass to ultrasound treatment inside the reaction vessel 2. The ultrasound unit 7 comprises two piezoelectric transducers 7a which are positioned in the inner lower portion of the reaction vessel.

The temperature sensor 8a is provided in the lower part of the inside of the reaction vessel, thus making it possible to measure temperature of the lower levels of the raw material mass which is being processed, and control if and when it reaches the predetermined temperature value.

The pressure sensor 9a is provided in the upper part of the inside of the reaction vessel 2, thus making it possible to measure pressure of the lower levels of the raw material mass which is being processed, and control if and when it reaches the predetermined pressure value.

The pressure-regulating unit 10 for regulating pressure inside the reaction vessel comprises one pressure adjusting valve 10a (not shown in FIG. 1), and an outlet opening 10b for discharging water vapor if necessary (not shown in FIG. 1). Therefore, if the temperature inside the reaction vessel 2 exceeds a predetermined value, the pressure adjusting valve 10a is opened, thus releasing pressure inside the reaction vessel through the outlet opening 10b.

The control unit 11 is electrically connected to the at least one inlet port 3a, the outlet port 3b, the water vapor injecting unit 4, the stirring unit 6, the ultrasound unit 7 and the pressure-regulating unit 10, as well as to the temperature sensor 8a and the pressure sensor 9a inside the reaction vessel (connections to the ultrasound unit 7, pressure-regulating unit 10 and temperature and pressure sensors 8a and 9a are not shown in FIG. 1 for the sake of simplifying the drawing). Thus, the control unit 11 is able to receive the corresponding signals from the sensors 8a and 9a, and control the water vapor injecting unit 4, the stirring unit 6, the ultrasound unit 7 and the pressure-regulating unit 10. By way of illustration, said control unit 11 may interrupt the saturated water vapor injection into the reaction vessel 2 if a predetermined temperature and/or pressure value is reached.

In the auxiliary unit 12 (not shown in FIG. 1) wherein the crude product is discharged from the reaction vessel 2 through the outlet port 3b, extraction of the oil is performed. First, in a solid-liquid separating unit 12a, solids such as foreign bodies or undesired slurries are separated from the liquid; secondly, in the water-removing unit 12b, water is removed from the liquid, and the oil can thus be obtained.

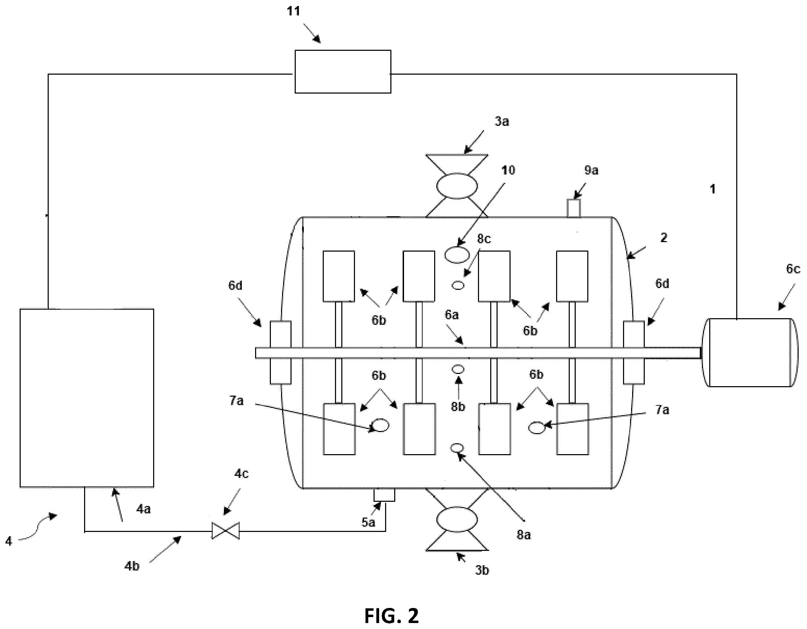

FIG. 2 illustrates another apparatus. In addition to all the features already disclosed in reference to the apparatus illustrated by FIG. 1, the apparatus shown in FIG. 2 further comprises two additional temperature sensors, wherein one additional temperature sensor 8b is positioned in the center of the inside of the reaction vessel 2, while the other one 8c is positioned in the upper part of the inside of the reaction vessel 2.

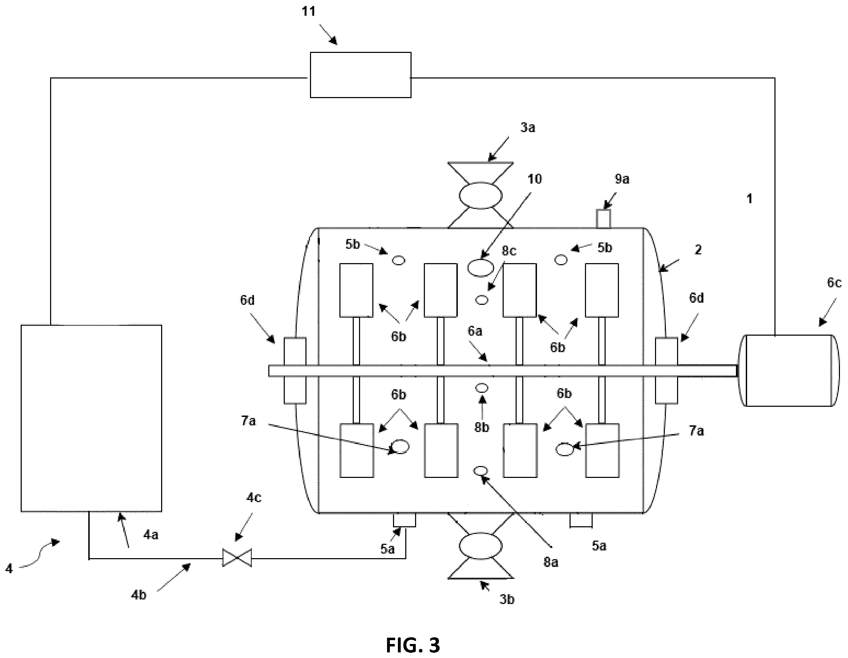

FIG. 3 illustrates another apparatus. In addition to all the features already disclosed in reference to the apparatuses illustrated by FIG. 1 and FIG. 2, the apparatus shown in FIG. 3 further comprises a plurality of vapor inlet ports into the reaction vessel 2 in which the raw material has been feed, more specifically, two vapor inlet ports 5a which are positioned in the lower portion of the reaction vessel 2, and two vapor inlet ports 5b which are positioned in the upper part of the reaction vessel. By injecting saturated water vapor also through these additional ports, specifically, through the two vapor inlet ports 5b, it is possible to further increase raw material mass compression and vapor and heat transfer, thus facilitating the oil extraction during the hydrothermal process. Although not specifically shown in FIG. 3 for the sake of simplifying the drawing, it will become apparent that all vapor inlet ports 5a and 5b are connected to the boiler 4a by means of the vapor conduit 4b. Furthermore, by the water vapor controlling valve 4c, it is possible to inject different vapor rates through each one of the inlet ports 5a and 5b.

Throughout the description and the claims, the word "comprise" and variations thereof are not intended to exclude other technical features, ingredients or steps. Additional advantages and features of the invention will become apparent to those skilled in the art upon examination of the description or may be learned by practice of the invention without undue burden.

### EXAMPLES

The following examples are provided by way of illustration and shall not be construed as limiting the invention.

### EXAMPLE 1- EXEMPLARY PRODUCTION OF CRUDE AVOCADO OIL

Avocado peel, avocado seeds, avocado pulp, whole avocado or any mixture thereof were ground until particles of average size in the range of 8-10 mm were obtained. The raw material inlet port of the 6 m³ reaction vessel was opened, and comminuted raw material (3.5-4 m³ of avocado material) was fed into the vessel, under initial stirring at 5 rpm. Said reaction vessel was equipped with a heating jacket which was used for further heating the plant-based raw material mass, piezoelectric transducers for carrying out the ultrasound treatment, and stirring means, more particularly, a horizontal rotation shaft with attached stirring blades, which extended in the longitudinal direction in the reaction vessel.

Once the avocado raw material was fed into the reaction vessel, the process according to the invention was used for producing corresponding crude avocado oil. Specifically, saturated water vapor at 2,430 kg/h (90% of boiler max. working capacity) was injected into the reaction vessel through at least one inlet port positioned in the lower part of the reaction vessel, while subjecting the raw material mass to low-frequency ultrasound treatment at 20 KHz and stirring at with the rotatable blades rotating at a rotational speed of 10-16 rpm. The raw material mass temperature was increased up to 60-75 °C. Afterwards, ultrasound treatment, stirring and saturated water vapor injection through the at least one inlet port position in the lower part of the reaction vessel were stopped. Then, 1,620 Kg/h (60% of boiler max. working capacity) of saturated water vapor were injected in the at least one inlet port located in the upper portion of the reaction vessel, until pressure rose up to 0.5-0.7 MPa. Once the predetermined pressure was reached, stirring was resumed. Once pressure decreased up to 0.15-0.20 MPa, degassing took place through the pressure-regulating unit, more particularly, by opening the pressure adjusting valve and releasing water vapor through the outlet opening. When a pressure value of 0.02 MPa was reached, crude product was discharged, and stirring was maintained at 10 rpm for facilitating the crude product discharge from the reaction vessel. This oil extraction process was completed in around 30-40 minutes. Finally, solid-liquid phases were separated in the auxiliary unit, and then residual water was removed. Said auxiliary unit contained conventional solid-liquid and water removal equipment

### EXAMPLE 2 - EXEMPLARY PRODUCTION OF EXTRA VIRGIN AVOCADO OIL

Pulp was extracted from avocado samples and comminuted into particles of average size in the range of 10-12 mm. The raw material inlet port of the 6 m³ reaction vessel was opened, and comminuted raw material (3.5-4 m³ of avocado pulp) was fed into the vessel, under initial stirring at 5 rpm. Said reaction vessel was equipped with a heating jacket which was used for further heating the raw material mass, piezoelectric transducers for carrying out the ultrasound treatment, and stirring means, more particularly, a horizontal rotation shaft with attached stirring blades, which extended in the longitudinal direction in the reaction vessel.

Once the avocado pulp was fed into the reaction vessel, the process according to the invention was used for producing corresponding extra virgin avocado oil. Thus, saturated water vapor at 1,620 kg/h (60% of boiler max. working capacity) was injected into the reaction vessel through at least one inlet port positioned in the lower part of the reaction vessel, while subjecting the raw material mass to low-frequency ultrasound treatment at 20 KHz and stirring at with the rotatable blades rotating at a rotational speed of 10-16 rpm. The raw material mass was kept at 27-30 °C during 25-30 minutes. Afterwards, ultrasound treatment, stirring and saturated water vapor injection through the at least one inlet port position in the lower part of the reaction vessel were stopped. Then, 1,080 Kg/h (40% of boiler max. working capacity) of saturated water vapor were injected in the at least one inlet port located in the upper portion of the reaction vessel, until pressure rose up to 0.3-0.4 MPa. Once the predetermined pressure was reached, stirring was resumed. Once pressure decreased up to 0.15-0.20 MPa, degassing took place through the pressure-regulating unit, more particularly, by opening the pressure adjusting valve and releasing water vapor through the outlet opening. When a pressure value of 0.02 MPa was reached, crude product was discharged, and stirring was maintained at 10 rpm for facilitating the crude product discharge from the reaction vessel. This oil extraction process was completed in around 35-45 minutes. Finally, solid-liquid phases were separated in the auxiliary unit, and then residual water was removed. Said auxiliary unit contained conventional solid-liquid and water removal equipment.

### EXAMPLE 3 - EXEMPLARY PRODUCTION OF FISH OIL

The fish residue material consisting of a mixture of tuna and mackerel heads and bones were ground until particles of average size in the range of 6-8 mm were obtained. The raw material inlet port of the 6 m³ reaction vessel was opened, and comminuted raw material (3.5-4 m³ of comminuted fish residue material) was fed into the vessel, under initial stirring at 5 rpm. Said reaction vessel was equipped with a heating jacket which was used for further heating the fish-based raw material mass, piezoelectric transducers for carrying out the ultrasound treatment, and stirring means, more particularly, a horizontal rotation shaft with attached stirring blades, which extended in the longitudinal direction in the reaction vessel.

Once the fish-based raw material was fed into the reaction vessel, the process according to the invention was used for producing corresponding fish oil. Specifically, saturated water vapor at 2,700 kg/h (100% of boiler max. working capacity) was injected into the reaction vessel through at least one inlet port positioned in the lower part of the reaction vessel, while subjecting the raw material mass to low-frequency ultrasound treatment at 20 KHz and stirring at with the rotatable blades rotating at a rotational speed of 10-14 rpm. The raw material mass temperature was increased up to 65-75 °C. Afterwards, ultrasound treatment, stirring and saturated water vapor injection through the at least one inlet port position in the lower part of the reaction vessel were stopped. Then, 1,620 Kg/h (60% of oiler max. working capacity) of saturated water vapor were injected in the at least one inlet port located in the upper portion of the reaction vessel, until pressure rose up to 0.5-0.7 MPa. Once the predetermined pressure was reached, stirring was resumed. Once pressure decreased up to 0.15-0.20 MPa, degassing took place through the pressure-regulating unit, more particularly, by opening the pressure adjusting valve and releasing water vapor through the outlet opening. When a pressure value of 0.02 MPa was reached, crude product was discharged, and stirring was maintained at 10 rpm for facilitating the crude product discharge from the reaction vessel. This oil extraction process was completed in around 35-50 minutes. Finally, solid-liquid phases were separated in the auxiliary unit, and then residual water was removed. Said auxiliary unit contained conventional solid-liquid and water removal equipment.

## Claims

1. A process for producing oil, comprising
a) feeding a raw material which is plant-based raw material or fish-based raw material into a reaction vessel;
b) subjecting the raw material to a hydrothermal treatment, wherein said hydrothermal treatment comprises:
- injecting saturated water vapor inside the reaction vessel,
wherein said injecting is conducted through at least one vapor inlet port, wherein the vapor inlet port is positioned in the lower portion of the reaction vessel,
wherein the raw material is subjected to stirring during said injection of saturated water vapor, and
wherein the raw material is also simultaneously subjected to an ultrasonic treatment during said injection of saturated water vapor; and
- terminating said injection of saturated water vapor when the pressure in the reaction vessel rises to a predetermined pressure in the range from 0.3 to 1.0 MPa and the temperature of the lower portion of the reaction vessel rises to a predetermined temperature, wherein the predetermined pressure and predetermined temperature are set based on the type of raw material;
c) depressurizing the interior of the reaction vessel;
d) discharging the resulting crude product from the reaction vessel through at least one outlet port;
e) extracting the oil from the crude product;
wherein the predetermined temperature in step b) is in the range of 25 to 85 °C; wherein the saturated water vapor injected in step b) is subcritical water; and wherein the ultrasonic treatment comprises applying ultrasound waves at a frequency in the range from 20 KHz to 40 KHz.

2. The process according to claim 1, wherein the raw material is plant-based raw material, said plant-based raw material comprising fruit peel, fruit seeds, fruit pulp, fruit leaves, whole fruit or any mixture thereof.

3. The process according to claim 2, wherein the fruit is selected from the group consisting of avocado, mango and coconut.

4. The process according to any preceding claim, wherein the raw material is plant-based raw material which is selected from the group consisting of avocado peel, avocado seeds, avocado pulp, whole avocado or any mixture thereof.

5. The process according to claim 1, wherein the raw material is plant-based raw material, said plant-based raw material comprising vegetable seeds, nuts or any mixture thereof.

6. The process according to claim 1, wherein the raw material is fish-based raw material, said fish-based raw material comprising fish heads, fish bones or any mixture thereof.

7. The process according to claim 6, wherein the fish is selected from the group consisting of tuna, mackerel and bonito.

8. The process according to any preceding claim, wherein the residence time of the raw material in the reactor vessel during the hydrothermal treatment is in the range of 1 to 150 minutes.

9. The process according to any preceding claim, wherein the injection of saturated water vapor in step b) is carried out through a plurality of vapor inlet ports, said plurality of vapor inlet ports comprising at least one vapor inlet port positioned in the lower portion of the reaction vessel, and at least one vapor inlet port positioned in the upper part of the reaction vessel.

10. The process according to claim 9, wherein the relative flow rate of saturated water vapor which is injected through the at least one vapor inlet port positioned in the lower portion of the reaction vessel is equal to or higher than 60% of the total flow rate of saturated water vapor injected into the reaction vessel, and the relative flow rate of saturated water vapor which is injected through the at least one vapor inlet port positioned in the upper portion of the reaction vessel is equal to or less than 40% of the total flow rate of saturated water vapor injected into the reaction vessel.

11. The process according to claim 9, wherein the injection of saturated water vapor in step b) is carried out through at least one vapor inlet port positioned in the lower portion of the reaction vessel during a first predetermined injection time, and wherein said injecting further comprises subsequently injecting saturated water vapor through at least one vapor inlet port positioned in the upper portion of the reaction vessel during a second predetermined injection time.

12. The process according to any one of claims 1-4 and 8-11, wherein the raw material is plant-based raw material comprising avocado pulp, and in step b), saturated water vapor is injected in the reaction vessel up to a predetermined pressure in the range from 0.3 to 0.6 MPa, and wherein residence time of the plant raw material in the reactor vessel during hydrothermal treatment is in the range from 20 to 50 minutes.

13. The process according to any one of claims 1-4 and 8-11, wherein the raw material is plant-based raw material comprising avocado seeds or mango seeds, wherein in step b), saturated water vapor is injected in the reaction vessel up to a predetermined pressure in the range of 0.4 to 0.9 MPa, and optionally wherein residence time of the plant-based raw material in the reactor vessel during hydrothermal treatment is in the range of 30 to 80 minutes.

14. The process according to any one of claims 1-4 and 8-11, wherein the raw material is plant-based raw material comprising avocado seeds, avocado pulp and avocado peel, wherein in step b), saturated water vapor is injected in the reaction vessel up to a predetermined pressure in the range from 0.4 to 0.9 MPa, and optionally wherein residence time of the plant-based raw material in the reactor vessel during hydrothermal treatment is in the range of 30 to 80 minutes.

15. The process according to any one of claims 1, 5 and 8-11, wherein the raw material is plant-based raw material comprising vegetable seeds, and wherein in step b), saturated water vapor is injected in the reaction vessel up to a predetermined pressure in the range from 0.4 to 0.9 MPa, wherein residence time of the plant raw material in the reactor vessel during hydrothermal treatment is in the range from 30 to 80 minutes.

## Patentansprüche

1. Verfahren zur Herstellung von Öl, umfassend
a) Einbringen eines Rohmaterials, bei dem es sich um ein pflanzliches Rohmaterial oder ein fischbasiertes Rohmaterial handelt, in einen Reaktionsbehälter;
b) Unterziehen des Rohmaterials einer hydrothermalen Behandlung, wobei die hydrothermale Behandlung umfasst:
- Einspritzen von gesättigtem Wasserdampf in den Reaktionsbehälter,
wobei das Einspritzen durch mindestens eine Dampfeinlassöffnung erfolgt,
wobei die Dampfeinlassöffnung in einem unteren Bereich des Reaktionsbehälters angeordnet ist,
wobei das Rohmaterial während des Einspritzens des gesättigten Wasserdampfes gerührt wird, und
wobei das Rohmaterial während des Einspritzens des gesättigten Wasserdampfes gleichzeitig einer Ultraschallbehandlung unterzogen wird; und
- Beenden des Einspritzens des gesättigten Wasserdampfs, wenn der Druck im Reaktionsbehälter auf einen vorbestimmten Druck im Bereich von 0,3 bis 1,0 MPa ansteigt und die Temperatur des unteren Bereichs des Reaktionsbehälters auf eine vorbestimmte Temperatur ansteigt, wobei der vorbestimmte Druck und die vorbestimmte Temperatur in Abhängigkeit von der Art des Rohmaterials festgelegt werden;
c) Druckentlasten des Inneren des Reaktionsbehälters;
d) Ablassen des entstandenen Rohprodukts aus dem Reaktionsbehälter durch mindestens eine Auslassöffnung;
e) Extrahieren des Öls aus dem Rohprodukt;
wobei die vorbestimmte Temperatur in Schritt b) im Bereich von 25 bis 85 °C liegt; wobei der in Schritt b) eingespritzte gesättigte Wasserdampf unterkritisches Wasser ist; und wobei die Ultraschallbehandlung das Anwenden von Ultraschallwellen mit einer Frequenz im Bereich von 20 kHz bis 40 kHz umfasst.

2. Verfahren nach Anspruch 1, wobei das Rohmaterial ein pflanzenbasiertes Rohmaterial ist, wobei das pflanzenbasierte Rohmaterial Fruchtschalen, Fruchtsamen, Fruchtfleisch, Fruchtblätter, ganze Früchte oder eine beliebige Mischung davon umfasst.

3. Verfahren nach Anspruch 2, wobei die Frucht aus der Gruppe bestehend aus Avocado, Mango und Kokosnuss ausgewählt ist.

4. Verfahren nach einem der vorhergehenden Ansprüche, wobei das Rohmaterial ein pflanzenbasiertes Rohmaterial ist, das aus der Gruppe ausgewählt ist, die aus Avocadoschale, Avocadosamen, Avocadofruchtfleisch, ganzer Avocado oder einer beliebigen Mischung davon besteht.

5. Verfahren nach Anspruch 1, wobei Rohmaterial ein pflanzenbasiertes Rohmaterial ist, wobei das pflanzenbasierte Rohmaterial Gemüsesamen, Nüsse oder eine beliebige Mischung davon umfasst.

6. Verfahren nach Anspruch 1, wobei das Rohmaterial ein fischbasiertes Rohmaterial ist, wobei das fischbasierte Rohmaterial Fischköpfe, Fischgräten oder eine beliebige Mischung davon umfasst.

7. Verfahren nach Anspruch 6, wobei der Fisch aus der Gruppe bestehend aus Thunfisch, Makrele und Bonito ausgewählt ist.

8. Verfahren nach einem der vorhergehenden Ansprüche, wobei die Verweilzeit des Rohmaterials im Reaktionsbehälter während der hydrothermischen Behandlung im Bereich von 1 bis 150 Minuten liegt.

9. Verfahren nach einem der vorhergehenden Ansprüche, wobei das Einspritzen des gesättigten Wasserdampfs in Schritt b) durch eine Vielzahl von Dampfeinlassöffnungen erfolgt, wobei die Vielzahl von Dampfeinlassöffnungen mindestens eine Dampfeinlassöffnung umfasst, die im unteren Bereich des Reaktionsbehälters angeordnet ist, und mindestens eine Dampfeinlassöffnung, die im oberen Bereich des Reaktionsbehälters angeordnet ist.

10. Verfahren nach Anspruch 9, wobei die relative Durchflussrate des gesättigten Wasserdampfs, der durch die mindestens eine im unteren Bereich des Reaktionsbehälters angeordnete Dampfeinlassöffnung eingespritzt wird, gleich oder größer als 60 % der gesamten Durchflussrate des in den Reaktionsbehälter eingespritzten gesättigten Wasserdampfs ist, und wobei die relative Durchflussrate des gesättigten Wasserdampfs, der durch die mindestens eine im oberen Bereich des Reaktionsbehälters angeordnete Dampfeinlassöffnung eingespritzt wird, gleich oder kleiner als 40 % der gesamten Durchflussrate des in den Reaktionsbehälter eingespritzten gesättigten Wasserdampfs ist.

11. Verfahren nach Anspruch 9, wobei das Einspritzen des gesättigten Wasserdampfs in Schritt b) während einer ersten vorbestimmten Einspritzzeit über mindestens eine im unteren Bereich des Reaktionsbehälters angeordnete Dampfeinlassöffnung erfolgt, und wobei das Einspritzen ferner umfasst, dass anschließend während einer zweiten vorbestimmten Einspritzzeit gesättigter Wasserdampf durch mindestens eine im oberen Bereich des Reaktionsbehälters angeordnete Dampfeinlassöffnung eingespritzt wird.

12. Verfahren nach einem der Ansprüche 1-4 und 8-11, wobei das Rohmaterial ein pflanzenbasiertes Rohmaterial ist, das Avocadofruchtfleisch umfasst, und wobei in Schritt b) gesättigter Wasserdampf bis zu einem vorbestimmten Druck im Bereich von 0,3 bis 0,6 MPa in das Reaktionsbehälter eingespritzt wird, und wobei die Verweilzeit des pflanzenbasierten Rohmaterials im Reaktionsbehälter während der hydrothermalen Behandlung im Bereich von 20 bis 50 Minuten liegt.

13. Verfahren nach einem der Ansprüche 1 bis 4 und 8 bis 11, wobei das Rohmaterial ein pflanzenbasiertes Rohmaterial ist, das Avocadosamen oder Mangosamen umfasst, wobei in Schritt b) gesättigter Wasserdampf bis zu einem vorbestimmten Druck im Bereich von 0,4 bis 0,9 MPa in den Reaktionsbehälter eingespritzt wird, und wobei optional die Verweilzeit des pflanzenbasierten Rohmaterials im Reaktionsbehälter während der hydrothermalen Behandlung im Bereich von 30 bis 80 Minuten liegt.

14. Verfahren nach einem der Ansprüche 1-4 und 8-11, wobei das Rohmaterial ein pflanzenbasiertes Rohmaterial ist, das Avocadosamen, Avocadofruchtfleisch und Avocadoschalen umfasst, wobei in Schritt b) gesättigter Wasserdampf bis zu einem vorgegebenen Druck im Bereich von 0,4 bis 0,9 MPa in den Reaktionsbehälter eingespritzt wird und wobei optional die Verweilzeit des pflanzenbasierten Rohmaterials im Reaktionsbehälter während der hydrothermalen Behandlung im Bereich von 30 bis 80 Minuten liegt.

15. Verfahren nach einem der Ansprüche 1, 5 und 8-11, wobei das Rohmaterial ein pflanzenbasiertes Rohmaterial ist, das Gemüsesamen umfasst, und wobei in Schritt b) gesättigter Wasserdampf bis zu einem vorbestimmten Druck im Bereich von 0,4 bis 0,9 MPa in den Reaktionsbehälter eingespritzt wird, wobei die Verweilzeit des pflanzenbasierten Rohmaterials im Reaktionsbehälter während der hydrothermalen Behandlung im Bereich von 30 bis 80 Minuten liegt.

## Revendications

1. Procédé pour produire une huile, comprenant
a) l'introduction d'une matière première qui est une matière première à base de plantes ou une matière première à base de poissons dans un récipient réactionnel ;
b) la soumission de la matière première à un traitement hydrothermal, dans laquelle le traitement hydrothermal comprend :
- l'injection de vapeur d'eau saturée à l'intérieur du récipient réactionnel,
laquelle injection est effectuée par l'intermédiaire d'au moins un orifice d'entrée de vapeur, lequel orifice d'entrée de vapeur est positionné dans la partie inférieure du récipient réactionnel,
dans laquelle la matière première est soumise à une agitation pendant ladite injection de vapeur d'eau saturée, et
dans laquelle la matière première est aussi simultanément soumise à un traitement par ultrasons pendant ladite injection de vapeur d'eau saturée ; et
- l'arrêt de ladite injection de vapeur d'eau saturée quand la pression dans le récipient réactionnel s'élève à une pression prédéterminée située dans la plage allant de 0,3 à 1,0 MPa et la température de la partie inférieure du récipient réactionnel s'élève à une température prédéterminée, dans lequel la pression prédéterminée et la température prédéterminée sont établies sur la base du type de matière première ;
c) la dépressurisation de l'intérieur du récipient réactionnel ;
d) la décharge du produit brut résultant hors du récipient réactionnel par l'intermédiaire d'au moins un orifice de sortie ;
e) l'extraction de l'huile à partir du produit brut ;
dans lequel la température prédéterminée dans l'étape b) est située dans la plage allant de 25 à 85 °C ; dans lequel la vapeur d'eau saturée injectée dans l'étape b) est de l'eau sous-critique ; et dans lequel le traitement par ultrasons comprend l'application d'ondes ultrasonores à une fréquence située dans la plage allant de 20 kHz à 40 kHz.

2. Procédé selon la revendication 1, dans lequel la matière première est une matière première à base de plantes, ladite matière première à base de plantes comprenant des enveloppes externes de fruits, des graines de fruits, de la pulpe de fruits, des feuilles de fruitiers, des fruits entiers ou l'un quelconque de leurs mélanges.

3. Procédé selon la revendication 2, dans lequel le fruit est choisi dans le groupe constitué par l'avocat, la mangue et la noix de coco.

4. Procédé selon l'une quelconque des revendications précédentes, dans lequel la matière première est une matière première à base de plantes qui est choisie dans le groupe constitué par la peau d'avocat, les noyaux d'avocat, la pulpe d'avocat, l'avocat entier et l'un quelconque de leurs mélanges.

5. Procédé selon la revendication 1, dans lequel la matière première est une matière première à base de plantes, ladite matière première à base de plantes comprenant des graines de légumes, des fruits à coque ou l'un quelconque de leurs mélanges.

6. Procédé selon la revendication 1, dans lequel la matière première est une matière première à base de poissons, ladite matière première à base de poissons comprenant des têtes de poissons, des arêtes de poissons ou l'un quelconque de leurs mélanges.

7. Procédé selon la revendication 6, dans lequel le poisson est choisi dans le groupe constitué par le thon, le maquereau et les Sardini.

8. Procédé selon l'une quelconque des revendications précédentes, dans lequel le temps de séjour de la matière première dans le récipient réactionnel pendant le traitement hydrothermal est situé dans la plage allant de 1 à 150 minutes.

9. Procédé selon l'une quelconque des revendications précédentes, dans lequel l'injection de vapeur d'eau saturée dans l'étape b) est effectuée par l'intermédiaire d'une pluralité d'orifices d'entrée de vapeur, ladite pluralité d'orifices d'entrée de vapeur comprenant au moins un orifice d'entrée de vapeur positionné dans la partie inférieure du récipient réactionnel, et au moins un orifice d'entrée de vapeur positionné dans la partie supérieure du récipient réactionnel.

10. Procédé selon la revendication 9, dans lequel le débit relatif de la vapeur d'eau saturée qui est injectée par l'intermédiaire de l'au moins un orifice d'entrée de vapeur positionné dans la partie inférieure du récipient réactionnel est égal ou supérieur à 60 % du débit total de la vapeur d'eau saturée injectée dans le récipient réactionnel, et le débit relatif de la vapeur d'eau saturée qui est injectée par l'intermédiaire de l'au moins un orifice d'entrée de vapeur positionné dans la partie supérieure du récipient réactionnel est égal ou inférieur à 40 % du débit total de la vapeur d'eau saturée injectée dans le récipient réactionnel.

11. Procédé selon la revendication 9, dans lequel l'injection de vapeur d'eau saturée dans l'étape b) est effectuée par l'intermédiaire d'au moins un orifice d'entrée de vapeur positionné dans la partie inférieure du récipient réactionnel pendant un premier temps d'injection prédéterminé, et dans lequel ladite injection comprend en outre ensuite l'injection de vapeur d'eau saturée par l'intermédiaire d'au moins un orifice d'entrée de vapeur positionné dans la partie supérieure du récipient réactionnel pendant un deuxième temps d'injection prédéterminé.

12. Procédé selon l'une quelconque des revendications 1 à 4 et 8 à 11, dans lequel la matière première est une matière première à base de plantes comprenant de la pulpe d'avocat et, dans l'étape b), de la vapeur d'eau saturée est injectée dans le récipient réactionnel jusqu'à une pression prédéterminée située dans la plage allant de 0,3 à 0,6 MPa, et dans lequel le temps de séjour de la matière première à base de plantes dans le récipient réactionnel pendant le traitement hydrothermal est situé dans la plage allant de 20 à 50 minutes.

13. Procédé selon l'une quelconque des revendications 1 à 4 et 8 à 11, dans lequel la matière première est une matière première à base de plantes comprenant des noyaux d'avocat ou des noyaux de mangue, dans lequel, dans l'étape b), de la vapeur d'eau saturée est injectée dans le récipient réactionnel jusqu'à une pression prédéterminée située dans la plage allant de 0,4 à 0,9 MPa, et éventuellement dans lequel le temps de séjour de la matière première à base de plantes dans le récipient réactionnel pendant le traitement hydrothermal est situé dans la plage allant de 30 à 80 minutes.

14. Procédé selon l'une quelconque des revendications 1 à 4 et 8 à 11, dans lequel la matière première est une matière première à base de plantes comprenant des noyaux d'avocat, de la pulpe d'avocat et de la peau d'avocat, dans lequel, dans l'étape b), de la vapeur d'eau saturée est injectée dans le récipient réactionnel jusqu'à une pression prédéterminée située dans la plage allant de 0,4 à 0,9 MPa, et éventuellement dans lequel le temps de séjour de la matière première à base de plantes dans le récipient réactionnel pendant le traitement hydrothermal est situé dans la plage allant de 30 à 80 minutes.

15. Procédé selon l'une quelconque des revendications 1, 5 et 8 à 11, dans lequel la matière première est une matière première à base de plantes comprenant des graines de légumes, et dans lequel, dans l'étape b), de la vapeur d'eau saturée est injectée dans le récipient réactionnel jusqu'à une pression prédéterminée située dans la plage allant de 0,4 à 0,9 MPa, dans lequel le temps de séjour de la matière première à base de plantes dans le récipient réactionnel pendant le traitement hydrothermal est situé dans la plage allant de 30 à 80 minutes.
